(19) Europäisches Patentamt / European Patent Office / Office européen des brevets

(11) **EP 3 088 841 B1**

(12) **EUROPÄISCHE PATENTSCHRIFT**

(45) Veröffentlichungstag und Bekanntmachung des Hinweises auf die Patenterteilung:
**14.03.2018  Patentblatt 2018/11**

(21) Anmeldenummer: **16167293.6**

(22) Anmeldetag: **27.04.2016**

(51) Int Cl.:
*G01B 11/30* (2006.01)     *G01B 11/27* (2006.01)
*G01B 11/24* (2006.01)     *G01N 21/952* (2006.01)
*B23Q 17/00* (2006.01)     *B23Q 17/20* (2006.01)
*B23Q 17/24* (2006.01)     *G01N 21/47* (2006.01)

(54) **VERFAHREN UND EINRICHTUNG ZUR BEURTEILUNG DER OBERFLÄCHENBESCHAFFENHEIT NACH DER WINKELAUFGELÖSTEN STREULICHTMESSMETHODE MIT AUTOMATISCHER LAGEERKENNUNG DES WERKSTÜCKS**

METHOD AND DEVICE FOR EVALUATING SURFACE CHARACTERISTICS BASED ON THE ANGLE-RESOLVED STRAY LIGHT MEASURING METHOD WITH AUTOMATIC DETERMINATION OF THE POSITION OF THE WORKPIECE

PROCÉDÉ ET DISPOSITIF POUR L'ESTIMATION DES CARACTÉRISTIQUES DE SURFACE D'UNE PIÈCE A USINER PAR MESURE DE LUMIÈRE DIFFUSÉE RÉSOLUE EN ANGLE AVEC RECONNAISSANCE AUTOMATIQUE DU POSITIONNEMENT DE LA PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2015  DE 102015106737**

(43) Veröffentlichungstag der Anmeldung:
**02.11.2016  Patentblatt 2016/44**

(73) Patentinhaber: **Brodmann Technologies GmbH 76476 Bischweier (DE)**

(72) Erfinder:
• **Brodmann, Rainer**
  **76476 Bischweier (DE)**
• **Brodmann, Boris**
  **76131 Karlsruhe (DE)**

(74) Vertreter: **Schaumburg und Partner Patentanwälte mbB Postfach 86 07 48 81634 München (DE)**

(56) Entgegenhaltungen:
**DE-A1- 3 037 622     DE-A1- 3 503 858**

• **Cz Lukianowicz ET AL: "OPTICAL SYSTEM FOR MEASUREMENT OF SURFACE FORM AND ROUGHNESS", MEASUREMENT SCIENCE REVIEW, 1. Januar 2001 (2001-01-01), XP055287148, Gefunden im Internet: URL:http://www.measurement.sk/Papers3/Lukianov.pdf [gefunden am 2016-07-08]**
• **Super User: "Messmaschine für Rundheit, Welligkeit, Rauheit", , 13. Juli 2016 (2016-07-13), XP055288324, Gefunden im Internet: URL:http://optosurf.de/index.php?option=com_content&view=article&id=27:messmaschine-fuer-rundheit-welligkeit-rauheit&catid=12&lang=de&Itemid=155 [gefunden am 2016-07-13]**
• **Rainer Brodmann: "Feinwelligkeit Schnelle Messung in der Fertigung", Opto Surf Produkt Broschuere, 31. Dezember 2013 (2013-12-31), XP055288339, Gefunden im Internet: URL:http://optosurf.de/images/Datenblaetter/Applikationsdatenblatt-4-Feinwelligkeit. pdf [gefunden am 2016-07-13]**
• **Optosurf: "Software SW 500", Optosurf Produkt Brochüre, 31. Dezember 2013 (2013-12-31), XP055288340, Gefunden im Internet: URL:http://optosurf.de/images/Datenblaetter/Produktdatenblatt-Software-SW-500-2-2013 .pdf [gefunden am 2016-07-13]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- Rainer Brodmann ET AL: "Kenngrößen der Mikrostruktur definiert", QZ, 1. Juli 2008 (2008-07-01), Seiten 46-49, XP055287385, Gefunden im Internet: URL:http://vda-qmc.de/fileadmin/redakteur/presse/Kenngroessen_der_Mikrostruktur_definiert.pdf [gefunden am 2016-07-11]

**Beschreibung**

Die Erfindung betrifft ein Verfahren zur berührungslosen Beurteilung der Beschaffenheit einer Oberfläche nach der winkelaufgelösten Streulichtmesstechnik, bei der ein optischer Sensor ein Strahlenbündel mit definierter Intensitätsverteilung auf die zu beurteilende Oberfläche eines Werkstücks aussendet und einen Messfleck beleuchtet und wobei die zurück reflektierte Intensität der Strahlung mittels eines Zeilensensors mit einer diskreten Anzahl von Fotodetektoren in einem definierten Winkelbereich erfasst wird. Weiterhin betrifft die Erfindung eine Einrichtung zur Lageerkennung eines Werkstücks und zur Beurteilung seiner Oberflächenbeschaffenheit.

Ein solches Verfahren ist aus der VDA-Empfehlung VDA 2009 aus Juli 2010 (VDA Verband der Automobilindustrie) bekannt, und dort ist die winkelaufgelöste Streulichtmesstechnik mit zugehöriger Einrichtung ausführlich beschrieben. Diese Streulichtmesstechnik eignet sich aufgrund der Robustheit des Verfahrens und der hohen Messgeschwindigkeit sowohl zur 100 % Online-Überwachung eines Prozesses, als auch speziell zur berührungslosen Messung der Rauheit quer zur Bearbeitungsrichtung Querrauheit) sowie längs zur Bearbeitungsrichtung (Längsrauheit). Gemessen wird hierbei die Winkelverteilung der Oberfläche einer feinbearbeiteten Oberfläche über rückgestreutes Licht. Daraus können sowohl Kennwerte für die Struktur der Oberfläche als auch Formmerkmale wie z.B. Rundheit, Welligkeit, Rattermarken etc. berechnet werden. Als Kenngröße zur Beurteilung der Beschaffenheit einer Oberfläche kann z.B. die Varianz der Streuwinkelverteilung Aq als Maß für die Mikrostruktur der Oberfläche verwendet werden.

Weiterhin ist ein solches Verfahren aus der EP 2 657 686 A1 und aus der Veröffentlichung "Kenngrößen der Mikrostruktur definiert", Rainer Brodmann et al., QZ Jahrgang 53 (2008), 7, S. 46-49, bekannt. Der beschriebene Streulichtsensor erfasst je nach Orientierung die Intensitätsverteilung quer oder längs zur Bearbeitungsrichtung des Werkstücks. Aus der Verteilungskurve können dann statistische Kennwerte berechnet werden, die Informationen über die Quer- oder Längsrauheit enthalten. Die wichtigsten Kennwerte sind hierbei Aq und M, worin M der Mittelwert der Verteilungskurve und damit der Schwerpunkt der Verteilungskurve ist.

Ein wichtiger Anwendungsfall ist das Messen der Oberflächenbeschaffenheit an einer Welle, die in einer Spannvorrichtung eingespannt ist. Dieses Einspannen kann manuell oder automatisiert mit einem Handhabungssystem, beispielsweise einem Roboter, erfolgen.

Typischerweise erfolgt das Spannen der Wellen zwischen Spitzen oder mittels spezieller Spannzangen. Hier kann es geschehen, dass ein falsches Werkstück oder das Werkstück nicht in der richtigen Lage eingespannt wird, beispielsweise wird das Werkstück mit seinem Kopfende an der falschen Spitze oder der falschen Spannzange eingespannt. Außerdem kann es geschehen, dass das Werkstück schräg oder verzogen eingespannt wird und seine Längsachse nicht mit der Soll-Lage übereinstimmt und bei der Drehung eine Taumelbewegung ausführt.

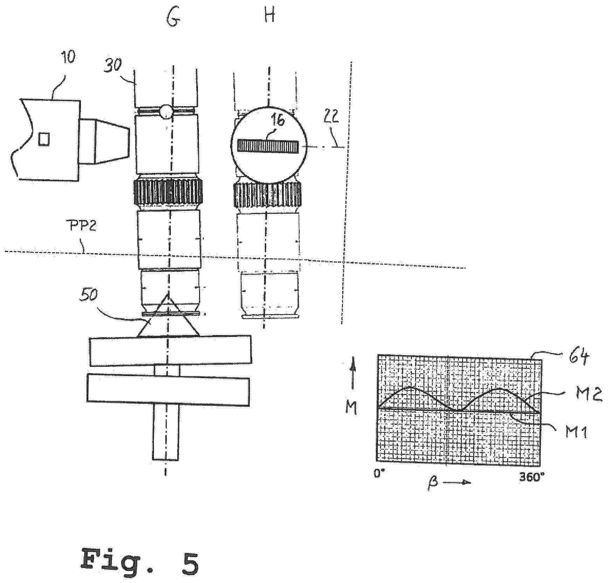

Das Dokument Cz Lukianowicz et al: "Optical System for measurement of Surface Form and Roughness", Measurement Science Review, 1. Jan. 2001 (2001-01-01), (XP055287148) wird als nächstliegender Stand der Technik angesehen. Es beschreibt eine Einrichtung zur berührungslosen Beurteilung der Beschaffenheit einer Oberfläche nach der winkelaufgelösten Streulichtmesstechnik. Hierbei werden aus der gemessenen Streulichtverteilung Oberflächen-Kennwerte, wie z.B. die Rundheit, bestimmt. Die optisch ermittelte Rundheit wird in Fig. 5 mit der Rundheit verglichen, wie sie mit einer mechanischen Abtastmethode gewonnen wird.

DE 35 03 858 A1 beschreibt eine Vorrichtung zur berührungslosen Beurteilung der Gestaltsabweichungen eines Objektes, wobei die winkelaufgelöste Streulichtmesstechnik zur Anwendung kommt. Ein ermittelter Kennwert-Verlauf kann durch eine Fourier-Analyse analysiert werden und anhand des Auftretens bzw. des Nichtauftretens von bestimmten Wellenzahlen kann entschieden werden, ob die Welle brauchbar ist oder nicht.

DE 30 37 622 A1 nennt Grundlagen für die berührungslose Beurteilung der Beschaffenheit einer Oberfläche nach der winkelaufgelösten Streulichtmesstechnik. Die Ermittlung eines Kennwert-Verlaufs in einer Prüfposition und der Vergleich mit einem Muster-Verlauf, bei dem das Werkstück in seiner richtigen Lage eingespannt ist, wird in darin nicht beschrieben.

Es ist Aufgabe der Erfindung, ein Verfahren und eine Einrichtung eingangs genannter Art anzugeben, bei der mit Hilfe des vorhandenen optischen Sensors, mit dessen Hilfe die Beschaffenheit der Oberfläche des Werkstücks gemessen wird, eine automatisierte Erkennung des Werkstücks und/oder der Lage des Werkstücks erfolgt. Diese Aufgabe wird für ein Verfahren durch die Merkmalskombination nach dem Anspruch 1 gelöst. Vorteilhafte Weiterbildungen sind in den abhängigen Ansprüchen angegeben.

Die Erfindung verwendet den zur berührungslosen Messung der Beschaffenheit der Oberfläche nach der winkelaufgelösten Streulichtmesstechnik vorhandenen optischen Sensor zusätzlich zur Identifikation des Werkstücks und/oder zur Lageerkennung. Die Erfindung geht davon aus, dass das Werkstück, typischerweise eine Welle, ortsabhängig, beispielsweise im Kopfteil oder im Nußteil, charakteristische und unverwechselbare Merkmale aufweist. Beispielsweise kann eine Verzahnung am Kopfende, eine Bohrung im Mittelbereich und/oder eine Nut im Fußbereich etc. als charakteristisches Lagemerkmal verwendet werden, welches die Art des Werkstücks und/oder die richtige Lage des Werkstücks in der Spannvorrichtung definiert. Der optische Sensor tastet nach dem Einspannen des Werkstücks in einer vorbestimmten Prüfposition, in der das charakteristische Merkmal normalerweise vorhanden sein sollte, die Oberfläche des Werkstücks während mindestens einer vollen Umdrehung des Werkstücks ab. Die im optischen Sensor enthaltene interne Lichtquelle und die Fotodetektoren des Zeilensensors dienen als Merkmaldetektor. Aus der Intensität eines Fotodetektor oder mehrerer Fotodetektoren wird ein Kennwert gebildet. Im einfachsten Fall ist dies ein Spannungswert oder ein Digitalwert, der der gemessenen Intensität eines einzigen Fotodetektor entspricht, und der Verlauf des Kennwerts wird abhängig vom Drehwinkel des Werkstücks ermittelt. Zuvor wurde in einem Einmessvorgang auf gleiche Weise ein Muster-Verlauf des Kennwerts abhängig vom Drehwinkel des Werkstücks und bei sonst gleichen Messbedingungen ermittelt, wobei das Werkstück in seiner richtigen Lage eingespannt ist. Der Verlauf des aktuell ermittelten Kennwerts abhängig vom Drehwinkel wird mit dem Muster-Verlauf verglichen. Bei fehlender Übereinstimmung wird ein Fehlersignal erzeugt, welches signalisiert, dass das falsche Werkstück und/oder das Werkstück fehlerhaft eingespannt ist. Bei einer Übereinstimmung von Kennwert-Verlauf und Muster-Verlauf erfolgt erst danach die Messung der Oberflächenbeschaffenheit mit Hilfe des optischen Sensors, wobei dieser in mindestens einer Messposition die Intensitäten der Fotodetektoren erfasst und eine Computersteuerung mindestens einen statistischen Kennwert, beispielsweise Aq für die Oberflächenrauheit berechnet.

Die Erfindung ermöglicht es, dass mit demselben Sensor, der zur Beurteilung der Beschaffenheit der Oberfläche dient, auch eine Identifizierung des Werkstücks und/oder eine Lageerkennung für das richtige Einspannen des Werkstücks in die Spannvorrichtung genutzt werden kann. In beiden Fällen, der Messung der Beschaffenheit der Oberfläche als auch bei der Lageerkennung, kann diese automatisch erfolgen, so dass eine 100 %-Kontrolle in der Fertigung möglich wird.

Vorteilhaft ist es, wenn eine Identifikation des Werkstücks oder seiner Lage an mehr als einer Prüfposition durchgeführt wird. Beispielsweise bei ähnlichen Wellen kann so eine eindeutige Werkstückzuordnung und/oder Lagebeurteilung erfolgen.

Weiterhin ist es vorteilhaft, wenn bei einem Einmessvorgang mehrere Muster-Verläufe für verschiedene Werkstücke ermittelt und in einer Steuerung programmtechnisch hinterlegt werden. Auf diese Weise ist es möglich, unterschiedliche Werkstücktypen zu prüfen und/oder bei einem Prüfvorgang und dem Vergleich von Kennwert-Verlauf und Muster-Verlauf im Falle des Einspannens eines falschen Werkstücks mitzuteilen, von welcher Art das eingespannte falsche Werkstück ist. Damit sind systematische Fehler im Fertigungsverlauf leichter erkennbar.

Vorteilhaft ist es auch, wenn als Kennwert die Summe der Intensitäten mehrerer oder aller Fotodetektoren des Zeilensensors berechnet und daraus der Kennwert-Verlauf ermittelt wird. Durch die Einbeziehung mehrerer Fotodetektoren wird die Aussage über das Prüfergebnis sicherer. Selbstverständlich muss dann auch im Einmessvorgang zum Ermitteln des Muster-Verlaufs in gleicher Weise vorgegangen werden und der Muster-Verlauf aus mehreren oder allen Fotodetektoren ermittelt werden.

Besonders vorteilhaft ist es, wenn aus den gemessenen Intensitäten der Fotodetektoren die Streulichtverteilung ermittelt und daraus als Kennwert das erste statistische Moment berechnet wird, welches dem Schwerpunkt einer Verteilung entspricht. Dieser Kennwert, gemäß der oben erwähnten VDA 2009 mit M bezeichnet, definiert den Schwerpunkt der gemessenen Streulicht-Verteilung und wird bei der Beurteilung der Oberflächenbeschaffenheit nach der winkelaufgelösten Streulichtmessmethode als Standardwert ermittelt. Dieser Kennwert M wird dann zur Ermittlung von Rundheit und Welligkeit des Werkstücks weiter herangezogen. Die Verwendung des Kennwerts M zur Werkstückidentifikation und/oder Lageerkennung ist vorteilhaft, denn sein Berechnungsalgorithmus ist bereits im Computerprogramm der Steuerung standardmäßig hinterlegt und andererseits hat er als statistischer Kennwert eine erhöhte Zuverlässigkeit. Dieser Kennwert M ist außerdem unabhängig vom Reflexionsvermögen der Oberfläche des Werkstücks. Selbstverständlich muss auch beim Muster-Verlauf der Verlauf des Kennwerts M anhand eines richtig eingespannten und richtigen Werkstücks bei sonst gleichen Messbedingungen ermittelt werden.

Weiterhin ist es vorteilhaft, wenn bei der Prüfung das Werkstück mehrere Umdrehungen vollzieht. Auf diese Weise wird die Aussage über die vorhandene Lage des Werkstücks statistisch sicherer durch Mittelwertbildung.

Bei der Erfindung wird zum Vergleich von Kennwert-Verlauf und Muster-Verlauf eine Kreuzkorrelationsberechnung durchgeführt. Bei Überschreiten eines vorbestimmten Betrags des Korrelationsfaktors, beispielsweise im Bereich von 0,7 bis 0,9 je nach Anwendungsfall, wird die Übereinstimmung von Kennwert-Verlauf und Muster-Verlauf festgestellt. Bei Unterschreiten dieses Schwellwerts wird das Fehlersignal ausgegeben.

Gemäß einem weiteren Aspekt der Erfindung wird eine Einrichtung zur Beurteilung der Oberflächenbeschaffenheit mit Lageerkennung des Werkstücks angegeben. Die mit dieser Einrichtung erzielbaren technischen Wirkungen stimmen mit denen des beschriebenen Verfahrens überein.

Ausführungsbeispiele der Erfindung werden nachfolgend anhand der Figuren erläutert. Darin zeigt

Figur 1    schematisch das Streulichtmessprinzip zur Messung von Querrauheit,

Figur 2    ein Anwendungsbeispiel mit Prüfvorrichtung und einer Welle als Werkstück,

Figur 3    Erkennung der richtigen Einspannung der Welle,

Figur 4    Erkennung einer Fehleinspannung durch exzentrischen Rundlauf, und

Figur 5    Erkennung einer Fehleinspannung durch Taumelbewegung.

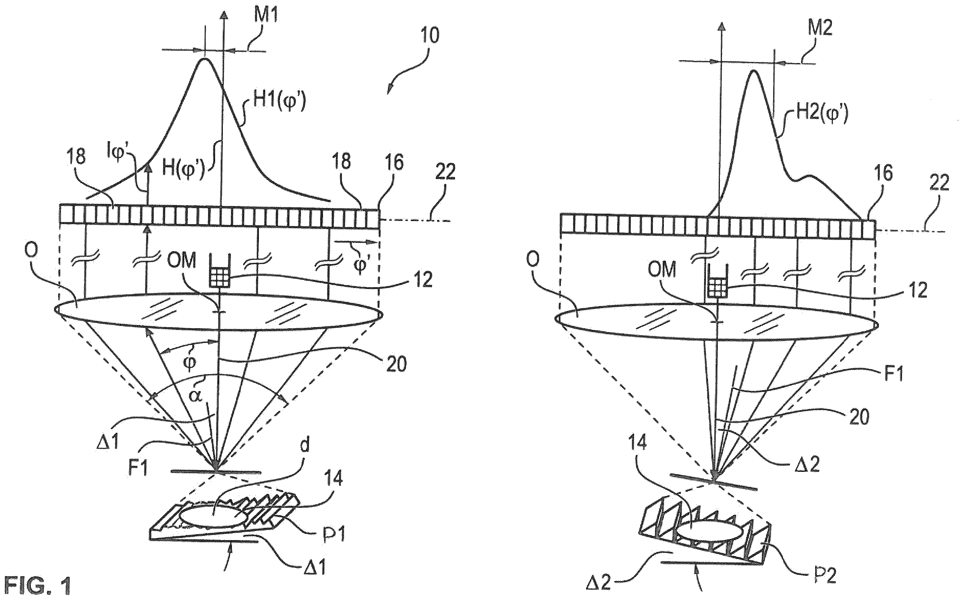

Figur 1 zeigt schematisch das Messprinzip, wie dies beispielsweise auch in der weiter oben erwähnten Richtlinie VDA 2009 beschrieben ist. Ein optischer Sensor 10 für die winkelaufgelöste Streulichtmessung umfasst als Lichtquelle 12 eine LED oder einen Halbleiterlaser, der die Oberfläche P1 einer Probe mit einem Strahlenbündel definierter Geometrie und Intensitätsverteilung beleuchtet. Das Strahlenbündel erzeugt auf der Oberfläche einen Messfleck 14, der in etwa kreisrund mit Durchmesser d ist. Das von der Mikrostruktur der Oberfläche P1 rückgestreute Licht wird innerhalb des maximalen messbaren Streuwinkelbereichs $\alpha$ von einem Messobjektiv O erfasst. Ein Zeilensensor 16 umfassend eine diskrete Anzahl von Fotodetektoren 18 (nur zwei Fotodetektoren sind bezeichnet) ist so angeordnet, dass die einzelnen Fotodetektoren 18 zu den diskreten Streuwinkelwerten $\varphi$ die entsprechenden Intensitätswerte $I_{\varphi'}$ in elektrische Signale wandeln, die als Digitalwerte weiterverarbeitet werden.

Das Messobjektiv O ist als Fourier-Optik oder f-Theta-Optik ausgebildet und transformiert die Streuwinkel $\varphi$ in einen Weg $\varphi'$, der der Position i der einzelnen Fotodetektoren 18 entlang des Zeilensensors 16 entspricht. Somit erhält man entlang der Anordnung der Fotodetektoren 18 mit Intensitäten $I_{\varphi'}$ eine Verteilung H1($\varphi'$). Aus dieser Intensitätsverteilung H1($\varphi'$) kann durch Normierung die Streuwinkelverteilung H($\varphi'$) der Mikrostruktur im Messfleck 14 berechnet werden.

Die Ausrichtung des Sensors 10 mit seiner Messachse 20 ist generell senkrecht zu der zu messenden Oberfläche P1. In diesem Falle stimmen die Flächennormale F1 der Oberfläche P1 und die Messachse 20 überein. Wenn die Flächennormale F1 um einen Winkel $\Delta 1$ gegenüber der Messachse 20 in Richtung der Längsachse 22 des Zeilensensors 16 verkippt ist, so verschiebt sich die Intensitätsverteilung H1($\varphi'$) um einen Wert M1 gegenüber der mittleren Lage der Intensitätsverteilung. Diese Verschiebung M1 kann genützt werden, um beispielsweise Welligkeiten oder Unrundheiten der Oberfläche P1 zu bestimmen.

Der Wert M1 entspricht dem ersten statistischen Moment der Streuwinkel-Verteilungskurve H1($\varphi'$) mit $\varphi' = \tan(\varphi)$ und damit dem Schwerpunkt dieser Verteilungskurve H1($\varphi'$).

Als erstes statistisches Moment einer Verteilungskurve H($\varphi'$) berechnet sich M allgemein zu

$$M = \Sigma\varphi' \cdot H(\varphi')$$

mit

$$H(\varphi') = I(\varphi')/\Sigma I(\varphi').$$

Bezogen auf die diskreten Fotodetektoren i berechnet sich M zu

$$M = \sum_{i=1}^{n}(\varphi'i) \cdot Ii/\sum_{i=1}^{n} Ii,$$

worin

i die Laufvariable von 1 bis n,
n die maximale Anzahl von Fotodetektoren,
Ii die gemessene Intensität des Fotodetektors i und
$\varphi'i$ der dem Fotodetektor i zugeordnete Streuwinkel ist.

Bei der Berechnung von M wird eine Normierung durchgeführt, was bedeutet, dass der Kennwert M unabhängig vom Reflexionsvermögen der Oberfläche des Werkstücks ist.

Im linken Bildteil der Figur 1 hat die Oberfläche P1 ein stochastisches Schleifprofil. Im Bildteil rechts hat eine weitere Oberfläche P2 ein asymmetrisches Drehprofil. Entsprechend ergibt sich ein Verlauf der Intensitätsverteilung H2($\varphi'$) und infolge eines Verkippwinkels $\Delta 2$ der Flächennormale F1 der Oberfläche P2 gegenüber der Messachse 20 in Richtung der Längsachse 22 des Zeilensensors 16 eine Verschiebung der Streulichtverteilung H2($\varphi'$) um M2.

Typische Werte für den Sensor 10 sind für den Durchmesser d des Messflecks 14 etwa 0,03 bis 0,9 mm. Der Öffnungswinkel $\alpha$ des Objektivs O ist zum Beispiel 32°. Eine entsprechende Anzahl von Fotodetektoren 18 ist so gewählt, dass sich eine Auflösung für $\varphi'$ von 1° ergibt. Die Anzahl der Messung und Berechnung von Kennwerten ist größer als 1000/sekunde.

Beim winkelaufgelösten Streulichtverfahren ist ein Vorteil die Unempfindlichkeit gegenüber Abstandsänderungen, die an ebenen Flächen bis zu 2 mm betragen kann. Anhand der mittleren Lage M der Streulichtverteilung H1($\varphi'$) kann auch die Lage des Sensors 10 an ebenen Flächen justiert werden. Aus der Intensitätsverteilung H1($\varphi'$) kann eine Vielzahl von Kenngrößen ermittelt werden (siehe hierzu VDA 2009), so z.B. die Varianz der Streuwinkelverteilung Aq als Maß für die Mikrostruktur der Oberfläche, die Schiefe der Streuwinkelverteilung Ask als Maß für die Profilschiefe der Mikrostruktur und zahlreiche weitere Einzelkenngrößen und Mehrfachkenngrößen.

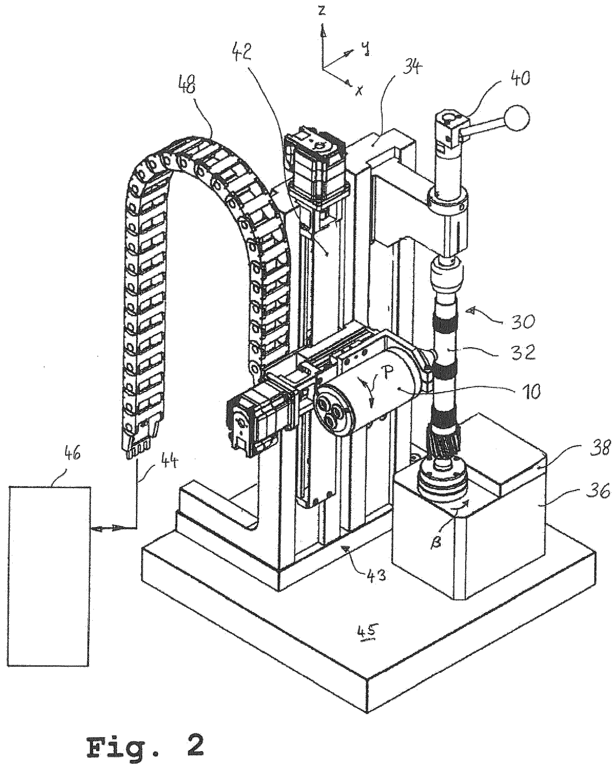

Figur 2 zeigt ein Anwendungsbeispiel, bei dem als Werkstück eine Welle 30 verwendet wird. An dieser Welle 30 sollen an ihrem Umfang an einer Funktionsfläche 32 (oder auch mehreren Funktionsflächen) Oberflächenkennwerte nach der winkelaufgelösten Streulichtmesstechnik, wie beispielsweise Querrauheit, Längsrauheit, Welligkeit, Rundheit mit Hilfe des Sensors 10 gemessen werden. Die Welle 30 ist drehbar in einer Spannvorrichtung 34 zwischen Spitzen gelagert und wird über einen Antrieb 36 in Drehbewegung versetzt, wobei der zurückgelegte Drehwinkel β mit Hilfe eines Drehwinkelsensors 38 erfasst wird. Dieser Drehwinkelsensor 38 kann induktiv oder optisch arbeiten, wie dies an sich bekannt ist und hier nicht näher erläutert wird. Die Welle 30 wird von einer Bedienperson manuell in die Spannvorrichtung 34 mit Hilfe eines Handbetätigungselements 40 eingesetzt. Bei diesem Einsetzen kann es vorkommen, dass die Welle 30 richtungsverkehrt eingesetzt wird, oder die Lagerung der Welle 30 ist fehlerhaft, was zu einer Taumelbewegung oder zu einem Rundschlag beim Drehen der Welle 30 führt. Auch ist es bei ähnlichen Wellentypen leicht möglich, dass eine Welle vom falschen Wellentyp eingespannt wird.

Der optische Sensor 10 ist in einer Messvorrichtung 42 gelagert, die den Sensor 10 parallel zur Längsachse des Werkstücks 30 (z-Achse) und senkrecht hierzu (x-Achse; γ-Achse) verschiebbar lagert, um verschiedene Prüfpositionen und/oder Messpositionen relativ zur Welle 30 einzustellen. Zusätzlich ist der Sensor 10 um seine Längsachse drehbar gelagert und kann in Richtung des Pfeiles P verdreht werden, um je nach Stellung Querrauheit oder Längsrauheit zu messen. Beim gezeigten Ausführungsbeispiel sind Messvorrichtung 42 und Spannvorrichtung 34 zu einer einzigen Einheit als Prüfvorrichtung 43 auf einer Grundplatte 45 stehend verbunden, was technische Vorteile beim Hantieren bringt. Der Sensor 10, der Antrieb 36 sowie der Drehwinkelsensor 38 sind über elektrische Leitungen 44 mit einer computerisierten Steuerung 46 verbunden, welche die Auswertung der Sensorsignale, die Berechnung von Kenngrößen etc. vornimmt. Die erforderlichen Leitungen 44 werden über eine bewegliche Gabelführung 48 geführt.

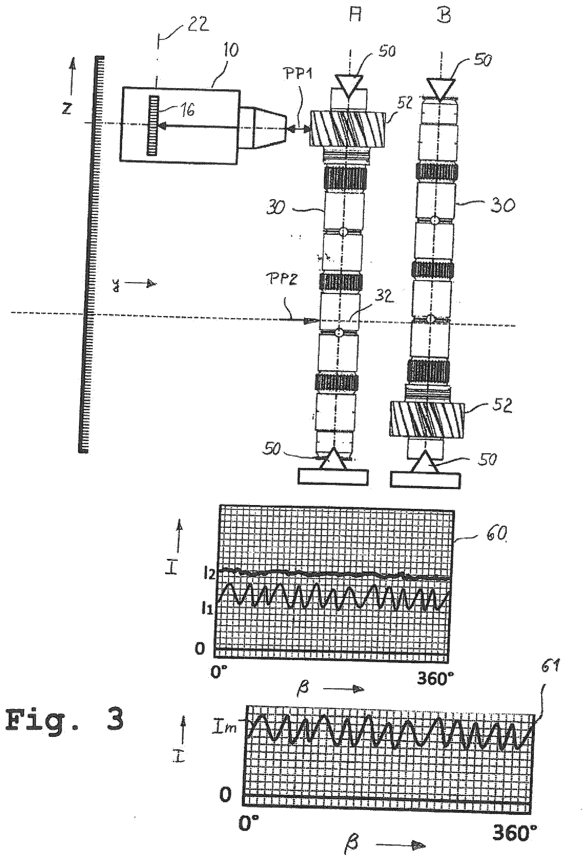

In Figur 3 ist ein Fall gezeigt, bei dem in einem Zustand A die Welle 30 richtig eingespannt wurde, wobei an ihr eine Verzahnung 52 im oberen Bereich vorhanden ist. Im Zustand B wurde die Welle 30 falsch herum eingespannt und die Verzahnung 52 liegt unten. Um zu prüfen, ob die Welle 30 richtig eingespannt ist, wird der Sensor 10 mit Hilfe der Messvorrichtung 42 in eine vorbestimmte Prüfposition PP1 verfahren, die zu bestimmten Werten auf der z-Achse und der x-Achse gehört (die Position in der x-Achse ist fest). Die Längsachse 22 des Zeilensensors 16 ist parallel zur z-Achse ausgerichtet und in diesem Zustand wird von der Steuerung 46 der von den Fotodetektoren 18 gemessene Intensitätswert I gemessen, beispielsweise die Intensität I1 des mittleren Fotodetektors 18 oder die Summe der Intensitäten mehrerer oder aller Fotodetektoren 18.

Im Diagramm 60 sind die gemessenen Intensitätswerte I über den Drehwinkel β im Bereich von 0° bis 360° aufgetragen. Wenn sich ein Intensitätsverlauf I1 mit wellenförmigem Verlauf entsprechend der Verzahnung 52 ergibt, so ist die Welle 30 richtig eingespannt, was dem Zustand A entspricht. Wird in derselben Prüfposition PP1 ein Intensitätsverlauf I2 festgestellt, so ist die Welle 30 gemäß dem Zustand B falsch eingespannt. In diesem sehr einfachen Fall ist anhand der Verläufe I1 und I2 sogleich erkennbar, welcher Zustand A oder B vorliegt. Zuvor wurde in einem Einmessvorgang mit richtig eingespannter Welle 30 ein Verlauf Im über den Winkel β als Muster-Verlauf bei sonst gleichen Messbedingungen gemessen und dieser Muster-Verlauf Im in der Steuerung 46 eingespeichert (siehe hierzu Diagramm 61). Wenn bei der Messung, beispielsweise des Intensitätsverlaufs I2, von der Steuerung 46 eine fehlende Übereinstimmung von Kennwert-Verlauf I2 und Muster-Verlauf Im festgestellt wird, so wird ein Fehlersignal erzeugt, welches signalisiert, dass die Welle 30 falsch herum eingespannt worden ist. Ist andererseits der Verlauf I1 in Übereinstimmung mit dem eingespeicherten Muster-Verlauf Im, so wird die Richtigkeit der Einspannung der Welle 30 festgestellt und nachfolgend wird der Sensor 10 zu einer Prüfposition PP2 der Messvorrichtung 42 bewegt, um hier die Funktionsfläche 32 zu vermessen und deren Rauheit, Welligkeit, Unrundheit etc. mit Hilfe der Steuerung 46 zu berechnen.

Vorzugsweise wird zum Vergleich von Intensitätsverlauf I1 bzw. I2 mit dem Muster-Verlauf Im in der Steuerung 46 die Kreuzkorrelationsauswertung verwendet. Mit Hilfe der Kreuzkorrelation kann festgestellt werden, ob sich zwei Signale ähneln. Die Kreuzkorrelation führt zu einem Korrelationsfaktor. Ist dieser als normierter Wert gleich +1, so besteht maximale Übereinstimmung zwischen dem aktuell gemessenen Verlauf I1 oder I2 und dem Muster-Verlauf Im. In der Realität kann infolge von Rauschen, geringfügige Änderung von Messparametern der Korrelationsfaktor auch bei völliger Übereinstimmung abweichen, so dass es ausreicht, wenn der Korrelationsfaktor zum Feststellen der Übereinstimmung einen vorbestimmten Schwellwert überschreitet. Typischerweise wird Übereinstimmung festgestellt, wenn der Schwellwert im Bereich von 0,7 bis 0,9 liegt. Die Verwendung der Kreuzkorrelation hat einen weiteren Vorteil, indem der Korrelationsfaktor unabhängig von einer Synchronisierung der Verläufe von I1, I2 und Im ist.

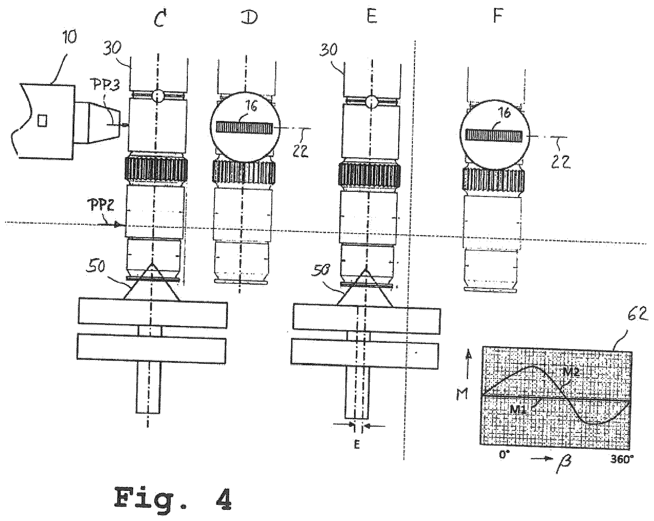

Figur 4 zeigt ein Beispiel, bei dem die jeweilige Welle 30 zwar lagerichtig zwischen Spitzen 50 eingespannt ist (Zustand C), jedoch exzentrisch um den Weg E versetzt ist (Zustand E). In den Zuständen D und F sind jeweils die Richtungen der Längsachsen 22 des jeweiligen Zeilensensors 16 angegeben. Wie zu erkennen ist, ist diese Längsachse 22 jeweils quer zur jeweiligen Längsachse der Welle 30 angeordnet. Gemessen wird hier an einem zylindrischen Abschnitt der Welle 30 an einer geeigneten Prüfstelle PP3. Im Diagramm 62 ist der Verlauf der weiter vorne erläuterten Kenngröße M, die aus allen Intensitätswerten der Fotodetektoren 18 berechnet wird, über den Drehwinkel β angegeben. Wenn die Welle 30 ohne exzentrischen Schlag eingespannt ist (Zustand C), so ergibt sich der Verlauf M1. Hat die Welle 30 einen exzentrischen Schlag, so ergibt sich der Verlauf M2 über den Drehwinkel β. Auch hier wurde zuvor ein Muster-Verlauf Mm an einer richtig eingespannten Welle 30 mit einem Verlauf ähnlich M1 eingespeichert. Die deutliche Abweichung von M2 wird von der Steuerung 46 durch Vergleich mittels der Kreuzkorrelationsauswertung erkannt und als Einspannfehler signalisiert. Aus dem Verlauf von M2 kann auch in einer weiteren Rechnung die Exzentrizität E ermittelt werden.

Figur 5 zeigt ein Beispiel für ein fehlerhaftes schräges Einspannen der Welle 30, so dass sich beim Drehen der Welle 30 eine Taumelbewegung ergibt (Zustand G). Auch hier wird die Längsachse 22 des Zeilensensors 16 in etwa senkrecht zur Längsachse der Welle 30 ausgerichtet. Im Diagramm 64 ist die Taumelbewegung anhand des Verlaufs M2 des Kennwerts M zu erkennen. Eine nicht taumelnde Bewegung der Welle 30 gibt einen Verlauf M1, was auch einem Muster-Verlauf Mm entspricht.

Die gezeigten Ausführungsbeispiele können vorteilhaft abgewandelt werden. So kann beim Beispiel nach Figur 3 ebenfalls der Kennwert M zur Ermittlung der Übereinstimmung von Kennwert-Verlauf und Muster-Verlauf verwendet werden. Auch ist es möglich, den Verlauf von I oder M über mehrere Umdrehungen zu bestimmen und daraus Mittelwertsverläufe zu berechnen, die eine höhere statistische Sicherheit beim Vergleich ermöglichen. Die Soll-Koordinaten für die Prüfpositionen sind in einem Programm der Steuerung 46 hinterlegt. Reicht ein einziges Merkmal, z.B. bei sehr ähnlichen Wellen unterschiedlichen Typs, nicht aus, so kann eine Identifikation der jeweiligen Welle auch an mehr als einer Prüfstelle durchgeführt werden. Durch Hinterlegen unterschiedlicher Muster-Verläufe kann an einer fehlerhaft eingespannten Welle erkannt werden, um welchen Wellentyp es sich handelt.

Die Anordnung mit dem Sensor kann auch zur Online-Messung in rauer Fertigungsumgebung während der Bearbeitung und bei gleichzeitiger Prüfung und Erkennung des Werkstücks und seiner Orientierung eingesetzt werden. Die vorliegende Erfindung ermöglicht so die Messung von Form, Welligkeit und Rauheit an Wellen und Nocken bei gleichzeitiger Prüfung und Erkennung des Werkstücks und seiner Orientierung und gegebenenfalls der korrekten Ausrichtung. Die Messzeiten je Werkstück liegen dabei im Sekundenbereich, wodurch auch eine 100%-Messung aller gefertigten Werkstücke möglich wird. Mit Hilfe des Sensors können Unrundheiten und Welligkeiten mit minimaler Amplitude von 0,01 $\mu$m festgestellt werden. Weiterhin können mit Hilfe des Sensors Oberflächendefekte wie Kratzer und Schlagstellen ermittelt werden.

Bezugszeichenliste

| 10 | Sensor |
| 12 | Lichtquelle |
| 14 | Messfleck |
| d | Durchmesser des Messfleck |

| P1 | Oberfläche |
| $\alpha$ | maximal messbarer Streuwinkelbereich |
| O | Messobjektiv |
| 16 | Zeilensensor |
| 18 | Fotodetektoren |
| $\varphi$ | Streuwinkelwerte |
| I$\varphi$' | Intensitätswerte |
| H1($\varphi$') | Intensitätsverteilung |
| H($\varphi$') | Streuwinkelverteilung |
| F1 | Flächennormale |
| 20 | Messachse |
| $\Delta$1 | Winkel |
| 22 | Längsachse des Zeilensensors |
| M1 | Verschiebung gegenüber der mittleren Lage der Intensitätsverteilung |
| P2 | Oberfläche |
| H2($\varphi$') | Intensitätsverteilung |
| $\Delta$2 | Verkippwinkel |
| M2 | Verschiebung |
| Aq | Varianz der Streuwinkelverteilung; Rauheitswert |
| Ask | Profilschiefe der Mikrostruktur |
| i | Laufvariable |
| n | maximale Anzahl von Fotodetektoren, |
| Ii | Intensität des Fotodetektors i |
| 30 | Welle |
| 32 | Funktionsfläche |
| 34 | Standvorrichtung |
| 36 | Antrieb |
| 38 | Drehwinkelsensor |
| B | Drehwinkel |
| 40 | Handbetätigungselement |
| 42 | Messvorrichtung |
| 43 | Prüfvorrichtung |
| 45 | Grundplatte |
| 46 | Steuerung |
| 48 | Kabelführung |
| 50 | Spitzen |
| 52 | Verzahnung |
| 60, 61, 62, 64 | Diagramme |
| I1 | Intensitätsverlauf |
| I2 | Intensitätsverlauf |
| Im | Muster-Verlauf |
| PP1, PP2, PP3 | Prüfpositionen |
| E | Exzentrischer Weg |
| A-H | Zustände |
| Mm | Muster-Verlauf des ersten statistischen Moments |

Patentansprüche

1. Verfahren zur berührungslosen Beurteilung der Beschaffenheit einer Oberfläche nach der winkelaufgelösten Streulichtmesstechnik,
bei dem ein optischer Sensor (10) ein Strahlenbündel (24) mit definierter Intensitätsverteilung auf die zu beurteilende Oberfläche (P1) eines Werkstücks (30) aussendet und einen Messfleck (14) beleuchtet, die zurückreflektierte Intensität ($I_i$) der Strahlung mittels eines Zeilensensors (16) mit einer diskreten Anzahl (i) von Fotodetektoren (18) in einem definierten Winkelbereich ($\alpha$) erfasst wird,

das Werkstück (30) drehbar in einer Spannvorrichtung (34) gelagert und der Drehwinkel ($\beta$) von einem Drehwinkelsensor (38) erfasst wird,

nach dem Einspannen des Werkstücks (30) in die Spannvorrichtung der Sensor (10) in mindestens einer vorbestimmten Prüfposition (PP1) die Oberfläche des Werkstücks (30) während mindestens einer vollen Umdrehung des Werkstücks (30) abtastet, die auf einen Fotodetektor (18) oder mehreren Fotodetektoren (18) des Zeilensensors (16) auftreffende Intensität (Ii) detektiert und daraus ein Kennwert (I1, I2, M1, M2) und dessen Verlauf abhängig vom Drehwinkel ($\beta$) des Werkstücks (30) ermittelt wird, der ermittelte Kennwert-Verlauf (I1, I2, M1, M2) mit einem zuvor in einem Einmessvorgang bei sonst gleichen Messbedingungen ermittelten Muster-Verlauf (Im, Mm) verglichen wird, bei dem das Werkstück (30) in seiner richtigen Lage eingespannt ist, bei fehlender Übereinstimmung von Kennwert-Verlauf und Muster-Verlauf ein Fehlersignal erzeugt wird, das signalisiert, dass das falsche Werkstück und/oder das Werkstück fehlerhaft eingespannt ist, bei Übereinstimmung von Kennwert-Verlauf und Muster-Verlauf der optische Sensor (10) in mindestens einer Messposition (PP2) die auf die Fotodetektoren (18) auftreffenden Intensitäten detektiert und daraus eine Steuerung mindestens einen statistischen Kennwert (Aq) für die Oberflächenbeschaffenheit nach der winkelaufgelösten Streulichtmesstechnik berechnet,

wobei zum Vergleich von Kennwert-Verlauf (I1, I2, M1, M2) und Muster-Verlauf (Im, Mm) eine Kreuzkorrelationsauswertung erfolgt und bei Überschreiten eines vorbestimmten Schwellwertes des Korrelationsfaktors die Übereinstimmung von Kennwert-Verlauf und Muster-Verlauf festgestellt wird.

2. Verfahren nach Anspruch 1, bei dem der Schwellwert im Bereich von 0,7 bis 0,9 liegt.

3. Verfahren nach Anspruch 1 oder 2, bei dem als Kennwert die Intensität des mittleren Fotodetektors (18) des Zeilensensors (16) verwendet wird.

4. Verfahren nach Anspruch 1 bis 3, bei dem als Kennwert die Summe der Intensitäten mehrerer oder aller Fotodetektoren (18) des Zeilensensors (16) berechnet und daraus der Kennwert-Verlauf (I1, I2, Im) ermittelt wird.

5. Verfahren nach Anspruch 4, bei dem aus den gemessenen Intensitäten aller Fotodetektoren (18) als Kennwert (M) das erste statistische Moment der Intensitätsverteilung berechnet wird, und bei dem der Verlauf dieses Kennwerts (M) abhängig vom Drehwinkel ($\beta$) mit einem Muster-Verlauf (Mm) verglichen wird.

6. Verfahren nach einem der vorhergehenden Ansprüche, bei dem der Sensor (10) in einer Messvorrichtung (42) parallel zur Längsachse des Werkstücks (30) und/oder senkrecht hierzu verschiebbar gelagert wird, um verschiedene Prüfpositionen und/oder Messpositionen einzustellen.

7. Verfahren nach einem der vorhergehenden Ansprüche, bei dem der Sensor (10) um seine Längsachse drehbar gelagert wird.

8. Verfahren nach einem der vorhergehenden Ansprüche, bei dem in der eingestellten Messposition (PP2) als statistischer Kennwert die Längsrauheit und/oder die Querrauheit und/oder die Welligkeit mittels der computergestützten Steuerung (46) berechnet wird.

9. Einrichtung zur berührungslosen Beurteilung der Beschaffenheit einer Oberfläche nach der winkelaufgelösten Streulichtmesstechnik, umfassend einen Optischen Sensor (10), einen Zeilensensor (16) mit einer diskreten Anzahl (i) von Fotodetektoren (18), eine Spannvorrichtung (34), einen Drehwinkelsensor (38), und eine Steuerung (46), bei dem der optischer Sensor (10) ein Strahlenbündel (24) mit definierter Intensitätsverteilung auf die zu beurteilende Oberfläche (P1) eines Werkstücks (30) aussendet und einen Messfleck (14) beleuchtet, die zurückreflektierte Intensität ($I_i$) der Strahlung mittels des Zeilensensors (16) mit einer diskreten Anzahl (i) von Fotodetektoren (18) in einem definierten Winkelbereich ($\alpha$) erfasst wird, das Werkstück (30) drehbar in der Spannvorrichtung (34) gelagert und der Drehwinkel ($\beta$) von dem Drehwinkelsensor (38) erfasst wird, der Sensor (10) in mindestens einer vorbestimmten Prüfposition (PP1) die Oberfläche des Werkstücks (30) während mindestens einer vollen Umdrehung des Werkstücks (30) abtastet, die Steuerung (46) die auf einen Fotodetektor (18) oder mehreren Fotodetektoren (18) des Zeilensensors (16) auftreffende Intensität (Ii) detektiert und daraus einen Kennwert (I1, I2, M1, M2) und dessen Verlauf abhängig vom Drehwinkel ($\beta$) des Werkstücks (30) ermittelt, die Steuerung (46) den ermittelten Kennwert-Verlauf (I1, I2, M1, M2) mit einem zuvor in einem Einmessvorgang bei sonst gleichen Messbedingungen ermittelten Muster-Verlauf (Im, Mm) vergleicht, bei dem das Werkstück (30) in seiner richtigen Lage eingespannt ist, bei fehlender Übereinstimmung von Kennwert-Verlauf und Muster-Verlauf ein Fehlersignal erzeugt, das signalisiert, dass das falsche Werkstück und/oder das Werkstück fehlerhaft eingespannt ist, und bei Übereinstimmung von Kennwert-Verlauf und Muster-Verlauf der optische Sensor (10) in mindestens einer Messposition (PP2) die auf die Fotodetektoren (18) auftreffenden Intensitäten detektiert und daraus die Steuerung (46) mindestens einen statistischen Kennwert (Aq) für die Oberflächenbeschaffenheit nach der winkelaufgelösten Streulichtmesstechnik berechnet.

wobei zum Vergleich von Kennwert-Verlauf (I1, I2, M1, M2) und Muster-Verlauf (Im, Mm) eine Kreuzkorrelationsauswertung erfolgt und bei Überschreiten eines vorbestimmten Schwellwertes des Korrelationsfaktors die Übereinstimmung von Kennwert-Verlauf und Muster-Verlauf festgestellt wird.

10. Einrichtung nach Anspruch 9, bei der die Steuerung (46) als Kennwert die Summe der Intensitäten mehrerer oder aller Fotodetektoren (18) des Zeilensensors (16) berechnet und daraus den Kennwert-Verlauf (I1, I2, Im) ermittelt.

11. Einrichtung nach Anspruch 10, bei der die Steuerung (46) aus den gemessenen Intensitäten aller Fotodetektoren (18) als Kennwert (M) das erste statistische Moment der Intensitätsverteilung berechnet, und den Verlauf dieses Kennwerts (M) abhängig vom Drehwinkel (β) mit einem Muster-Verlauf (Mm) vergleicht.

## Claims

1. A method for the contactless assessment of the quality of a surface according to the angle-resolved scattered light measuring technique,
in which an optical sensor (10) emits a beam of rays (24) with defined intensity distribution onto the surface (P1) of a workpiece (30), which surface is to be assessed, and illuminates a measuring spot (14),
the reflected intensity (Ii) of the radiation is detected by a line sensor (16) with a discrete number (i) of photodetectors (18) in a defined angular range (α),
the workpiece (30) is rotatably mounted in a clamping device (34) and the angle of rotation (β) is detected by an angle-of-rotation sensor (38),
after clamping the workpiece (30) into the clamping device, the sensor (10) scans in at least one predetermined test position (PP1) the surface of the workpiece (30) during at least one full rotation of the workpiece (30),
the intensity (Ii) incident on a photodetector (18) or several photodetectors (18) of the line sensor (16) is detected and a characteristic value (I1, I2, M1, M2) and its curve dependent on the angle of rotation (β) of the workpiece (30) is determined,

the determined characteristic value curve (I1, I2, M1, M2) is compared with a sample curve (Im, Mm) previously determined in a calibration process under otherwise identical measuring conditions, in which the workpiece (30) is clamped in its correct position, in case of no correspondence between characteristic value curve and sample curve an error signal is generated which signals that the wrong workpiece is clamped and/or the workpiece is clamped incorrectly,
in the case of a correspondence between characteristic value curve and sample curve the optical sensor (10) detects in at least one measuring position (PP2) the intensities incident on the photodetectors (18) and a control calculates therefrom at least one statistic characteristic value (Aq) for the surface quality according to the angle-resolved scattered light measuring technique,
wherein for a comparison between characteristic value curve (I1, I2, M1, M2) and sample curve (Im, Mm) a cross-correlation evaluation takes place and when a predetermined threshold value of the correlation factor is exceeded the correspondence of characteristic value curve and sample curve is determined.

2. The method according to claim 1, in which the threshold value is in the range from 0.7 to 0.9.

3. The method according to claim 1 or 2, in which as a characteristic value the intensity of the center photodetector (18) of the line sensor (16) is used.

4. The method according to claim 1 to 3, in which as a characteristic value the sum of the intensities of several or all photodetectors (18) of the line sensor (16) is calculated and the characteristic value curve (I1, I2, Im) is determined therefrom.

5. The method according to claim 4, in which from the measured intensities of all photodetectors (18) the first statistic moment of the intensity distribution is calculated as a characteristic value (M),
and in which the curve of this characteristic value (M) dependent on the angle of rotation (β) is compared with a sample curve (Mm).

6. The method according to one of the preceding claims, in which the sensor (10) is mounted in a measuring device (42) so as to be movable parallel to the longitudinal axis of the workpiece (30) and/or perpendicularly thereto to set various test positions and/or measuring positions.

7. The method according to one of the preceding claims, in which the sensor (10) is rotatably mounted about its longitudinal axis.

8. The method according to one of the preceding claims, in which, in the set measuring position (PP2), the longitudinal roughness and/or the cross roughness and/or the waviness are calculated as a statistic characteristic value by a computer-aided control (46).

9. An apparatus for the contact-less assessment of the quality of a surface according to the angle-resolved scattered light measuring technique, comprising an optical sensor (10), a line sensor (16) with a discrete number (i) of photodetectors (18), a clamping device (34), an angle-of-rotation sensor (38) and a control (46), in which the optical sensor (10) emits a beam of rays (24) with defined intensity distribution onto the surface (P1) of a workpiece (30), which surface is to be assessed, and illuminates a measuring spot (14), the reflected intensity (Ii) of the radiation is detected by the line sensor (16) with a discrete number (i) of photodetectors (18) in a defined angular range ($\alpha$), the workpiece (30) is rotatably mounted in the clamping device (34) and the angle of rotation ($\beta$) is detected by the angle-of-rotation sensor (38), the sensor (10) scans in at least one predetermined test position (PP1) the surface of the workpiece (30) during at least one full rotation of the workpiece (30), the control (46) detects the intensity (Ii) incident on a photodetector (18) or several photodetectors (18) of the line sensor (16) and determines therefrom a characteristic value (I1, I2, M1, M2) and its curve dependent on the angle of rotation ($\beta$) of the workpiece (30), the control (46) compares the determined characteristic value curve (I1, I2, M1, M2) with a sample curve (Im, Mm) previously determined in a calibration process under otherwise identical measuring conditions in which the workpiece (30) is clamped in its correct position, in case of no correspondence between characteristic value curve and sample curve an error signal is generated which signals that the wrong workpiece is clamped and/or the workpiece is clamped incorrectly, and in the case of a correspondence between characteristic value curve and sample curve the optical sensor (10) detects in at least one measuring position (PP2) the intensities incident on the photodetectors (18) and the control (46) calculates therefrom at least one statistic characteristic value (Aq) for the surface quality according to the angle-resolved scattered light measuring technique, wherein for a comparison between characteristic value curve (I1, I2, M1, M2) and sample curve (Im, Mm) a cross correlation evaluation takes place and when a predetermined threshold value of the correlation factor is exceeded the correspondence between characteristic value curve and sample curve is determined.

10. The apparatus according to claim 9, in which the control (46) determines as a characteristic value the sum of the intensities of several or all photodetectors (18) of the line sensor (16) and determines therefrom the characteristic value curve (I1, I2, Im).

11. The apparatus according to claim 10, in which the control (46) calculates from the measured intensities of all photodetectors (18) the first statistic moment of the intensity distribution as a characteristic value (M), and compares the curve of this characteristic value (M) dependent on the angle of rotation ($\beta$) with a sample curve (Mm).

**Revendications**

1. Procédé pour l'évaluation sans contact de l'état d'une surface selon la technique de mesure de lumière diffusée à résolution angulaire, selon lequel un capteur optique (10) émet un faisceau lumineux (24) présentant une distribution d'intensités définie sur la surface (P1) à évaluer d'une pièce (30) et éclaire un point de mesure (14), l'intensité ($I_i$) réfléchie du rayonnement est détectée au moyen d'un capteur linéaire (16) comprenant un nombre (i) discret de photo-détecteurs (18) dans une plage angulaire ($\alpha$) définie, la pièce (30) est montée en rotation dans un dispositif de serrage (34) et l'angle de rotation ($\beta$) est détecté par un capteur d'angle de rotation (38), une fois la pièce (30) montée dans le dispositif de serrage, le capteur (10), dans au moins une position de contrôle (PP1) prédéfinie, balaye la surface de la pièce (30) pendant au moins un tour complet de la pièce (30), l'intensité (Ii) heurtant un photo-détecteur (18) ou plusieurs photo-détecteurs (18) du capteur linéaire (16) est détectée et une valeur caractéristique (I1, I2, M1, M2) et la variation de celle-ci en fonction de l'angle de rotation ($\beta$) de la pièce (30) en est déterminée, la variation de valeur caractéristique (I1, I2, M1, M2) déterminée est comparée à une variation de motif (Im, Mm) déterminée précédemment au cours d'une procédure de mesure dans des conditions de mesure identiques, dans lequel la pièce (30) est montée dans sa position exacte, lorsque la variation de valeur caractéristique et la variation de motif ne concordent pas, un signal d'erreur est généré, qui signale que c'est la mauvaise pièce qui est montée et/ou que la pièce est mal montée, lorsque la variation de valeur caractéristique et la variation de motif concordent, le capteur optique (10) détecte, dans au moins une position de mesure (PP2), les intensités heurtant les photo-détecteurs (18) et une commande calcule à partir de cela au moins une valeur caractéristique statistique (Aq) pour l'état de surface selon la technique de mesure de lumière diffusée à résolution angulaire, dans lequel pour la comparaison de la variation de valeur caractéristique (I1, I2, M1, M2) et de la variation de motif (Im, Mm), une évaluation par corrélation croisée est réalisée et, lorsqu'une valeur seuil prédéfinie du facteur de corrélation est dépassée, la concordance de la variation de valeur caractéristique et de la variation de motif est établie.

2. Procédé selon la revendication 1, selon lequel la valeur seuil se situe dans la plage de 0,7 à 0,9.

3. Procédé selon la revendication 1 ou 2, selon lequel l'intensité du photo-détecteur (18) central du capteur linéaire (16) est utilisée comme valeur caractéristique.

4. Procédé selon la revendication 1 à 3, selon lequel la somme des intensités de plusieurs photo-détecteurs (18) du capteur linéaire (16) ou de tous les photo-détecteurs est calculée et la variation de valeur caractéristique (I1, I2, Im) en est déduite.

5. Procédé selon la revendication 4, selon lequel le premier moment statistique de la répartition d'intensités est calculé en tant que valeur caractéristique (M) à partir des intensités mesurées de tous les photo-détecteurs (18), et selon lequel la variation de cette valeur caractéristique (M) en fonction de l'angle de rotation (β) est comparée à une variation de motif (Mm).

6. Procédé selon l'une quelconque des revendications précédentes, selon lequel le capteur (10) est monté dans un dispositif de mesure (42) de manière à pouvoir se déplacer parallèlement à l'axe longitudinal de la pièce (30) et/ou perpendiculairement à celle-ci, afin de régler différentes positions de contrôle et/ou positions de mesure.

7. Procédé selon l'une quelconque des revendications précédentes, selon lequel le capteur (10) est monté de manière à pouvoir tourner autour de son axe longitudinal.

8. Procédé selon l'une quelconque des revendications précédentes, selon lequel, dans la position de mesure (PP2) réglée, la rugosité longitudinale et/ou la rugosité transversale et/ou le facteur d'ondulation sont calculés en tant que valeur caractéristique statistique au moyen de la commande assistée par ordinateur (46).

9. Dispositif d'évaluation sans contact de l'état d'une surface selon la technique de mesure de lumière diffusée à résolution angulaire, comprenant un capteur optique (10), un capteur linéaire (16) pourvu d'un nombre (i) discret de photodétecteurs (18), un dispositif de serrage (34), un capteur d'angle de rotation (38), et une commande (46), selon lequel le capteur optique (10) émet un faisceau lumineux (24) présentant une répartition d'intensités définie sur la surface (P1) à évaluer d'une pièce (30) et éclaire un point de mesure (14), l'intensité ($I_i$) réfléchie du rayonnement est détectée au moyen du capteur linéaire (16) comprenant un nombre (i) discret de photo-détecteurs (18) dans une plage angulaire ($\alpha$) définie, la pièce (30) est montée en rotation dans le dispositif de serrage (34) et l'angle de rotation ($\beta$) est détecté par le capteur d'angle de rotation (38), le capteur (10), dans au moins une position de contrôle (PP1) prédéfinie, balaye la surface de la pièce (30) pendant au moins un tour complet de la pièce (30), la commande (46) détecte l'intensité ($I_i$) heurtant un photo-détecteur (18) ou plusieurs photo-détecteurs (18) du capteur linéaire (16) et en déduit une valeur caractéristique (I1, I2, M1, M2) et la variation de celle-ci en fonction de l'angle de rotation ($\beta$) de la pièce (30), la commande (46) compare la variation de valeur caractéristique (I1, I2, M1, M2) déterminée à une variation de motif (Im, Mm) déterminée précédemment au cours d'une procédure de mesure dans des conditions de mesure identiques, dans lequel la pièce (30) est montée dans sa position exacte, lorsque la variation de valeur caractéristique et la variation de motif ne concordent pas, un signal d'erreur est généré, qui signale que c'est la mauvaise pièce qui est montée et/ou que la pièce est mal montée, et lorsque la variation de valeur caractéristique et la variation de motif concordent, le capteur optique (10) détecte, dans au moins une position de mesure (PP2), les intensités heurtant les photo-détecteurs (18) et la commande (46) calcule à partir de cela au moins une valeur caractéristique statistique (Aq) pour l'état de surface selon la technique de mesure de lumière diffusée à résolution angulaire, dans lequel pour la comparaison de la variation de valeur caractéristique (I1, I2, M1, M2) et de la variation de motif (Im, Mm), une évaluation par corrélation croisée est réalisée et, lorsqu'une valeur seuil prédéfinie du facteur de corrélation est dépassée, la concordance de la variation de valeur caractéristique et de la variation de motif est établie.

10. Dispositif selon la revendication 9, dans lequel la commande (46) détermine la somme des intensités de plusieurs photo-détecteurs ou de tous les photo-détecteurs (18) du capteur linéaire (16) en tant que valeur caractéristique et en déduit la variation de valeur caractéristique (I1, I2, Im).

11. Dispositif selon la revendication 10, dans lequel la commande (46) calcule à partir des intensités mesurées de tous les photo-détecteurs (18) le premier moment statistique de la répartition d'intensités en tant que valeur caractéristique (M), et
compare le tracé de cette valeur caractéristique (M) en fonction de l'angle de rotation (β) à une variation de motif (Mm).

FIG. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2657686 A1
- DE 3503858 A1
- DE 3037622 A1

**In der Beschreibung aufgeführte Nicht-Patentliteratur**

- **RAINER BRODMANN et al.** Kenngrößen der Mikrostruktur definiert. *QZ Jahrgang 53,* 2008, vol. 7, 46-49
- **CZ LUKIANOWICZ et al.** Optical System for measurement of Surface Form and Roughness. *Measurement Science Review,* 01. Januar 2001